# EUROPÄISCHE PATENTSCHRIFT

(11) **EP 3 221 182 B1**
(45) Veröffentlichungstag und Bekanntmachung des Hinweises auf die Patenterteilung: **02.01.2019**
(21) Anmeldenummer: 15794208.7
(22) Anmeldetag: 16.11.2015
(51) Int. Cl.: E05B 85/26, E05C 3/24, E05B 17/00, B60N 2/36, B60N 2/015, B60N 2/22

(54) **VERRIEGELUNGSVORRICHTUNG, INSBESONDERE ZUR VERRIEGELUNG EINER LEHNE EINES FAHRZEUGSITZES MIT EINER FAHRZEUGSTRUKTUR**
LOCKING DEVICE, ESPECIALLY FOR LOCKING A BACKREST OF A VEHICLE SEAT TO A VEHICLE STRUCTURE
DISPOSITIF DE VERROUILLAGE, SERVANT EN PARTICULIER À VERROUILLER UN DOSSIER D'UN SIÈGE DE VÉHICULE COMPRENANT UNE STRUCTURE DE VÉHICULE

(30) Priorität: 18.11.2014 DE 102014223556; 29.06.2015 DE 202015103395 U
(43) Veröffentlichungstag der Anmeldung: 27.09.2017
(73) Patentinhaber: Adient Luxembourg Holding S.à r.l., 1855 Luxembourg (LU)
(72) Erfinder: SCHUG, Andreas, 46049 Oberhausen (DE); RAPEDIUS, Joerg, 67728 Muenchweiler (DE)
(74) Vertreter: Liedhegener, Ralf
(86) Internationale Anmeldenummer: PCT/EP2015/076661
(87) Internationale Veröffentlichungsnummer: WO 2016/079041

(56) Entgegenhaltungen:
- EP-A1- 2 127 939
- WO-A1-2010/066319
- DE-A1-102004 056 143
- DE-B3-102011 101 283

## Beschreibung

Die Erfindung betrifft eine Verriegelungsvorrichtung, insbesondere zur Verriegelung einer Lehne eines Fahrzeugsitzes mit einer Fahrzeugstruktur, mit einem Drehfallenschloss zum Verriegeln eines Gegenelements.

### Stand der Technik

Aus dem Stand der Technik sind allgemein Verriegelungsvorrichtungen zur Verriegelung einer relativ zu einer Sitzfläche klappbaren Lehne eines Fahrzeugsitzes an einer Fahrzeugstruktur bekannt. Derartige Verriegelungsvorrichtungen umfassen ein Bedienelement, mittels welchem ein an der Fahrzeugstruktur oder an der Lehne befestigtes Drehfallenschloss, das mit einem korrespondierenden, an der Lehne oder der Fahrzeugstruktur befestigten, Gegenelement verriegelbar ist, entriegelt werden kann.

Aus der DE 10 2007 016 409 A1 ist ein Schloss für ein Fahrzeug, insbesondere für einen Fahrzeugsitz bekannt, welches in einem verriegelten Zustand mit einem Gegenelement zusammenwirkt. Das Schloss umfasst eine um einen ersten Lagerbolzen schwenkbar gelagerte Klinke, welche eine Aufnahme für das Gegenelement sowie eine Funktionsfläche aufweist, ein um einen zweiten Lagerbolzen schwenkbar gelagertes Fangelement und einen um den zweiten Lagerbolzen schwenkbar gelagerten Spannexzenter, welcher im verriegelten Zustand des Schlosses mit der Funktionsfläche zusammenwirkt, um den verriegelten Zustand des Schlosses zu sichern. Ein solches Schloss wird auch als Drehfallenschloss oder kurz Drehfalle bezeichnet. Für einen Entriegelungsvorgang des Schlosses wird erst das Fangelement von der Funktionsfläche der Klinke weggeschwenkt. Der Spannexzenter wird dann vom Fangelement oder einem Betätigungselement des Fangelements mitgenommen und dadurch ebenfalls von der Funktionsfläche der Klinke weggeschwenkt. Die Klinke öffnet aufgrund einer Federvorspannung und gibt das Gegenelement frei.
Die DE 10 2010 055 246 A1 offenbart einen Fahrzeugsitz mit einer Lehne welche aus einer Gebrauchsstellung in eine Nichtgebrauchsstellung relativ zu einer Fahrzeugstruktur schwenkbar und mittels einer Verriegelungsvorrichtung in der Gebrauchsstellung mit der Fahrzeugstruktur verriegelbar ist. Die Verriegelungsvorrichtung ist mit der Lehne verbunden und weist ein als eine Klinke ausgeführtes Verriegelungselement auf, das in der Gebrauchsstellung mit einem als Schließbolzen ausgeführten Gegenelement der Fahrzeugstruktur in Verriegelungseingriff ist. Mittels eines Auswerfers ist die entriegelte Lehne um ein bestimmtes Maß aus der Gebrauchsstellung in eine Auswurfstellung schwenkbar. Von dort kann die Lehne von Hand weiter in ihre Nichtgebrauchsstellung geschwenkt werden. Durch die Auswurfstellung wird ein ungewolltes, selbsttätiges Verriegeln des Schlosses vor dem Vorschwenken der Lehne vermieden. Die DE102011101283 B3 Verriegelungsvorrichtung zur Verriegelung einer Lehne eines Fahrzeugsitzes mit einer Fahrzeugstruktur mit einem Drehfallenschloss zum Verriegeln eines Gegenelements wobei die Verriegelungsvorrichtung einen Auswurfhebel aufweist, der in einem entriegelten Zustand des Drehfallenschlosses durch Betätigung eines Bediengriffs das Gegenelement relativ zum Drehfallenschloss verschiebt.

### Aufgabe

Aufgabe der vorliegenden Erfindung ist es insbesondere, eine gegenüber dem Stand der Technik verbesserte Verriegelungsvorrichtung zur Verriegelung einer klappbaren Lehne eines Fahrzeugsitzes an einer Fahrzeugstruktur anzugeben. Insbesondere soll die Lehne in eine Auswurfstellung überführbar sein und die dazu notwendige Energie über einen Bediengriff einleitbar sein. Insbesondere soll ein aus dem Stand der Technik bekanntes Drehfallenschloss modular um eine Auswurffunktion erweiterbar sein.

### Lösung

Die Aufgabe wird erfindungsgemäß gelöst durch eine Verriegelungsvorrichtung gemäß dem Oberbegriff des Anspruchs 1.

Dadurch, dass die Verriegelungsvorrichtung einen Auswurfhebel aufweist, der in einem entriegelten Zustand des Drehfallenschlosses durch Betätigung eines Bediengriffs das Gegenelement relativ zum Drehfallenschloss verschiebt, kann die zur Relativverschiebung des Gegenelements notwendige Energie über einen Bediengriff eingeleitet werden. Dadurch benötigt die Verriegelungsvorrichtung keinen leistungsstarken Kraftspeicher. Unter einem Bediengriff sind alle Bedienelemente zu verstehen, auf die ein Benutzer manuell eine Kraft aufbringen kann, beispielsweise Hebel, Griffe, Knöpfe oder Zugschlaufen. Das Gegenelement kann ein Bolzen oder ein Drahtbügel sein.
Vorteilhafte Ausgestaltungen, welche einzeln oder in Kombination miteinander eingesetzt werden können, sind Gegenstand der Unteransprüche.
Vorzugsweise weist das Drehfallenschloss eine um eine erste Schwenkachse drehbare Klinke zum Verriegeln des Gegenelements, und wenigstens ein um eine zweite Schwenkachse drehbares Sicherungsmittel zum Abstützen der Klinke in einer das Gegenelement verriegelnden Position auf. Das wenigstens eine Sicherungsmittel kann ein Fangstück sein. Zusätzlich zu dem Fangstück kann ein Spannexzenter vorgesehen sein. Ein Spannexzenter dient der Spielfreistellung zwischen Klinke und Gegenelement.
Das wenigstens eine Sicherungsmittel kann durch Betätigung des Bediengriffs in eine Zwischenstellung drehbar sein, wobei die Klinke in dieser Zwischenstellung in eine entriegelte Position drehbar ist, in der das Gegenelement von der Klinke freigegeben ist. Vorzugsweise ist die Klinke mittels einer vorgespannten Federanordnung in eine öffnende Richtung vorgespannt. Die Federanordnung unterstützt eine Drehbewegung der Klinke, sobald das wenigstens eine Sicherungsmittel die Drehbewegung freigibt. Die Klinke kann eine Aufnahme aufweisen, aus der das Gegenelement im verriegelten Zustand der Klinke nicht austreten kann. In einem entriegelten Zustand der Klinke wird das Gegenelement von der Klinke freigegeben, wodurch das Gegenelement die Aufnahme verlassen kann oder sich innerhalb der Aufnahme verlagern kann, insbesondere mittels des Auswurfhebels.

Der Auswurfhebel verschiebt in der entriegelten Position der Klinke, insbesondere mittels einer weiteren Betätigung des Bediengriffs über eine Zwischenstellung hinaus, das Gegenelement relativ zu der Klinke. In dieser geänderten Relativlage von Klinke und Gegenelement kann die Klinke nicht wieder verriegeln. Der Bediengriff kann somit losgelassen werden, ohne dass die Verriegelungsvorrichtung wieder verriegelt. Dies ist beispielsweise von Vorteil, wenn die Verriegelungsvorrichtung zur Verriegelung einer klappbaren Lehne eines Fahrzeugsitzes an einer Fahrzeugstruktur dient, und ein Benutzer zunächst die Lehne entriegelt, den Bediengriff wieder loslässt, und die Lehne erst anschließend schwenken möchte.

Das Drehfallenschloss kann eine voll funktionsfähige Einheit zum Verriegeln eines Gegenelements sein, dass ohne dazu weitere Bauteile notwendig sind. In modularer Weise kann das Drehfallenschloss um den Auswurfhebel und insbesondere weitere Bauteile der Verriegelungsvorrichtung ergänzt werden. Dadurch ist ein Baukasten geschaffen. Für Anwendungen, in denen eine Relativverschiebung von Klinke und Gegenelement nicht zwingend erforderlich ist, oder bereits die Federvorspannung der Klinke dazu ausreichend groß ist, beispielsweise aufgrund einer sehr geringen Gewichtskraft und Neigung der Lehne, kann das Drehfallenschloss ohne Auswurfhebel verbaut werden.

Vorzugsweise ist zwischen dem Bediengriff und dem wenigstens einen Sicherungsmittel ein Hebel angeordnet, wobei der Hebel eine, insbesondere am Bediengriff aufzubringende, Entriegelungskraft zum Drehen des wenigstens einen Sicherungsmittels reduziert. Aufgrund einer durch den Hebel erzeugten Getriebeübersetzung kann der Bedienweg vergrößert sein.

In einer bevorzugten Ausführungsform ist der Hebel drehbar um die zweite Schwenkachse gelagert, um die auch das wenigstens eine Sicherungsmittel drehbar ist. Der Hebel kann mit dem wenigstens einen Sicherungsmittel gekoppelt sein. Der Hebel kann insbesondere mittels eines ersten Zapfens, der in eine Betätigungsöffnung eines Fangelements eingreift, mit einem Fangelement gekoppelt sein. Der Hebel kann wenigstens temporär mit einem Verbindungselement gekoppelt sein. Das Verbindungselement kann ein Bowdenzug oder ein Seilzug sein, wobei das Verbindungselement wenigstens mittelbar an den Bediengriff gekoppelt ist. Die Kopplung zwischen dem Verbindungselement und dem Hebel kann in eine Richtung einen Freilauf aufweisen. Beispielsweise kann ein Seilzugende eines Bodenzugs eine mit dem Hebel verbundene Öse durchlaufen und eine Tonne als Endstück aufweisen. Dadurch kann der Seilzug in einer Richtung durch die Öse bewegt werden, während in der anderen Richtung, gegebenenfalls nach Durchlaufen eines Leerwegs, die Tonne die Öse und damit den Hebel mitnimmt. Die Öse kann mittels eines zweiten Zapfens mit dem Hebel verbunden sein. Bezogen auf die zweite Schwenkachse ist der ersten Zapfen vorzugsweise radial weiter innen angeordnet als der zweite Zapfen.

Der Hebel und der Auswurfhebel können mittels eines Mitnehmers derart miteinander gekoppelt sein, dass eine Betätigung des Bediengriffs bis zu einer Zwischenstellung den Hebel dreht, während der Auswurfhebel unbewegt bleibt, und eine Betätigung des Bediengriffs über die Zwischenstellung hinaus den Hebel und den Auswurfhebel dreht. Dadurch übt der Auswurfhebel erst dann eine Kraft auf das Gegenelement aus, wenn die Klinke entriegelt ist und das Gegenelement aus der Aufnahme der Klinke und einer Aufnahme des Schlossgehäuses austreten kann.

Die Verriegelungsvorrichtung kann an der Fahrzeugstruktur befestigt sein und das Gegenelement an der Lehne befestigt sein. Eine solche Anordnung kann beispielsweise in Stufenheckfahrzeugen vorteilhaft sein, bei denen die Verriegelungsvorrichtung an der Hutablage und das Gegenelement an der Lehne befestigt ist.

Die Verriegelungsvorrichtung kann an der Lehne befestigt sein und das Gegenelement an der Fahrzeugstruktur befestigt sein. Eine solche Anordnung kann beispielsweise in Kombifahrzeugen vorteilhaft sein.

Mit anderen Worten ausgedrückt umfasst die Verriegelungsvorrichtung eine Bewegungseinheit, welche derart ausgebildet und mit dem Bediengriff gekoppelt ist, dass bei einer Öffnung des Drehfallenschlosses mittels des Bediengriffs an der Bewegungseinheit eine Kraft erzeugbar ist, welche derart eine relative Bewegung der Lehne zur Fahrzeugstruktur im Bereich der Verriegelungsvorrichtung und somit des Drehfallenschlosses zum Gegenelement erzeugt, dass das Drehfallenschloss und das Gegenelement aus einer Verriegelungsposition bewegbar sind.

Die mit der Erfindung erzielten Vorteile bestehen insbesondere darin, dass bei einem Öffnen der Verriegelungsvorrichtung und somit der Entriegelung der Lehne mittels des Bediengriffs eine relative Bewegung des Gegenelements aus einer Position, in welcher ein mechanischer Eingriff des Gegenelements in das Drehfallenschloss möglich ist, erfolgt. Dadurch wird vermieden, dass, nach Beendigung der Betätigung des Bediengriffs und daraus folgender Rückbewegung des Drehfallenschlosses sowie nicht vom Nutzer bewegter Lehne, eine erneute Verriegelung der Lehne an die Fahrzeugstruktur erfolgt. Für die dabei durchgeführte Bewegung der Lehne um eine Drehachse der klappbaren Lehne sind in besonders vorteilhafter Weise keine zusätzlichen und aufwändigen Antriebselemente, beispielsweise Federelemente, erforderlich. Somit ist es einem Nutzer in besonders vorteilhafter Weise möglich, die Verriegelung der Lehne komfortabel, beispielsweise von einem Laderaum des Fahrzeugs aus, zu lösen und ein Klappen der Lehne von einer Fahrgastzelle des Fahrzeugs aus durchzuführen.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: schematisch eine Seitenansicht eines Fahrzeugsitzes mit einer Verriegelungsvorrichtung zur Verriegelung einer klappbaren Lehne eines Fahrzeugsitzes an einer Fahrzeugstruktur,
- Fig. 2:: schematisch eine Explosionsdarstellung eines aus dem Stand der Technik bekannten Drehfallenschlosses,
- Fig. 3:: eine Explosionsdarstellung einer erfindungsgemäßen Verriegelungsvorrichtung zur Verriegelung einer klappbaren Lehne eines Fahrzeugsitzes an einer Fahrzeugstruktur,
- Fig. 4:: schematisch eine perspektivische Darstellung der Verriegelungsvorrichtung gemäß Figur 3,
- Fig. 5:: schematisch eine perspektivische Darstellung eines Ausschnitts der Verriegelungsvorrichtung gemäß Figur 3 in einem mit einem Gegenelement verriegelten Zustand,
- Fig. 6:: schematisch eine perspektivische Darstellung des Ausschnitts der Verriegelungsvorrichtung gemäß Figur 5 während einer Entriegelung in einem ersten Zustand,
- Fig. 7:: schematisch eine perspektivische Darstellung des Ausschnitts der Verriegelungsvorrichtung gemäß Figur 5 während einer Entriegelung in einem zweiten Zustand,
- Fig. 8:: schematisch eine perspektivische Darstellung des Ausschnitts der Verriegelungsvorrichtung gemäß Figur 5 nach einer Entriegelung in einem dritten Zustand, und
- Fig. 9: schematisch eine perspektivische Darstellung des Ausschnitts der Verriegelungsvorrichtung gemäß Figur 5 nach einer Entriegelung in einem vierten Zustand.

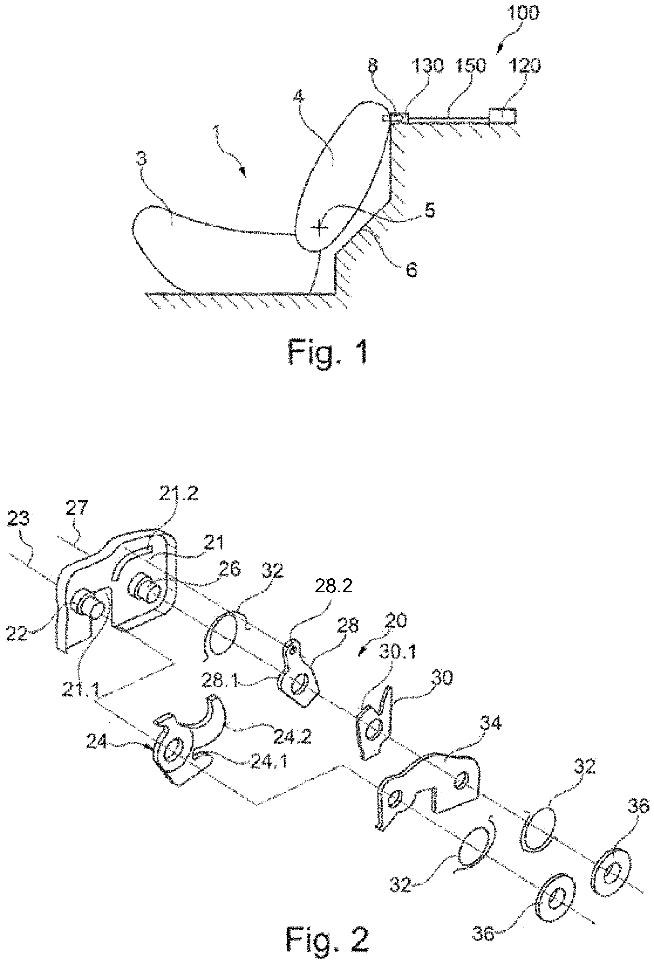

Figur 1 zeigt einen Fahrzeugsitz 1 mit einem Sitzteil 3 und einer Lehne 4, montiert in einer Fahrzeugstruktur 6. Die Lehne 4 ist als eine Rückenlehne zum Abstützen eines Rückens eines Insassen ausgelegt und um eine Lehnendrehachse 5 relativ zu dem Sitzteil 3 schwenkbar. Dadurch kann die Lehne 4 aus einer zum Personentransport geeigneten Gebrauchsstellung in eine weitgehend horizontale Nichtgebrauchsstellung und zurück geschwenkt werden. Figur 1 zeigt die Gebrauchsstellung. Zur Sicherung der Lehne 4 in der Gebrauchsstellung gegen ein unbeabsichtigtes Vorschwenken, ist an der Fahrzeugstruktur 6 eine Verriegelungsvorrichtung 100 befestigt, die ein fest mit der Lehne 4 verbundenes und als ein Drahtbügel ausgeführtes Gegenelement 8 aufnehmen und verriegeln kann. Die Anordnung der Verriegelungsvorrichtung 100 und des Gegenelements 8 können in einer Abwandlung des Ausführungsbeispiels auch derart vertauscht sein, dass die Verriegelungsvorrichtung 100 fest mit der Lehne 4 und das Gegenelement 8 fest mit der Fahrzeugstruktur 6 verbunden ist.

In Figur 2 ist beispielhaft ein aus dem Stand der Technik bekanntes Drehfallenschloss 20 dargestellt, wie es als ein Bestandteil der Verriegelungsvorrichtung 100 verwendet werden kann. Die erfindungsgemäße Verriegelungsvorrichtung 100 ist jedoch nicht auf die Verwendung genau dieses Drehfallenschlosses 20 beschränkt. Auch andere aus dem Stand der Technik bekannte Drehfallenschlösser lassen sich in der Verriegelungsvorrichtung 100 einsetzen.

Das Drehfallenschloss 20 umfasst ein Schlossgehäuse 21, welches vorliegend einteilig und halboffen ausgebildet ist, aber auch zweiteilig und geschlossen sein kann. Ein erster Lagerbolzen 22 steht senkrecht vom Schlossgehäuse 21 ab und ist vorliegend innen hohl als eine Hülse mit einer Durchgangsöffnung ausgebildet. Der erste Lagerbolzen 22 definiert eine erste Schwenkachse 23 und lagert eine schwenkbare Klinke 24. Auf die dadurch definierten Zylinderkoordinaten beziehen sich die nachfolgend verwendeten Richtungsangaben.

Zum Zusammenwirken mit dem Gegenelement 8 weisen das Schlossgehäuse 21 und die Klinke 24 jeweils eine Aufnahme 21.1 bzw. 24.1 auf, welche einander in einem verriegelten Zustand des Drehfallenschlosses 20 kreuzen. In einem entriegelten Zustand des Drehfallenschlosses 20 ist die Klinke 24 so geschwenkt, dass ihre Aufnahme 24.1 und die Aufnahme 21.1 des Schlossgehäuses 21 für das Gegenelement 8 aufnahmebereit sind, beziehungsweise das Gegenelement 8 aus dem Drehfallenschloss 20 austreten kann.

Ein zum ersten Lagerbolzen 22 paralleler zweiter Lagerbolzen 26 steht ebenfalls senkrecht vom Schlossgehäuse 21 ab und ist vorliegend ebenfalls innen hohl als eine Hülse mit einer Durchgangsöffnung ausgebildet. Der zweite Lagerbolzen 26 definiert eine zweite Schwenkachse 27, die parallel versetzt zu der ersten Schwenkachse 23 angeordnet ist. Der zweite Lagerbolzen 26 lagert ein Fangelement 28 und entlang des zweiten Lagerbolzens 26 versetzt dazu einen Spannexzenter 30, welche beide unabhängig voneinander schwenkbar und zwischen zwei durch die Materialstärke der ebenen Klinke 24 definierten Ebenen angeordnet sind. Die Klinke 24, das Fangelement 28 und der Spannexzenter 30 sind jeweils in eine Schwenkrichtung vorgespannt, vorliegend durch Federn 32, wobei die Klinke 24 in ihrer Öffnungsrichtung und das Fangelement 28 und der Spannexzenter 30 in ihrer Schließrichtung vorgespannt sind.

Im verriegelten Zustand des Drehfallenschlosses 20 beaufschlagt der vorgespannte Spannexzenter 30 mittels einer exzentrisch zum zweiten Lagerbolzen 26 gekrümmten Spannfläche 30.1 die Klinke 24 mit einer Kraft, um ein schließendes Moment auf die Klinke 24 auszuüben. Mit der Spannfläche 30.1 wirkt eine Funktionsfläche 24.2 der Klinke 24 zusammen, wobei ein Winkel zwischen der Spannfläche 30.1 und der Funktionsfläche 24.2 außerhalb des Selbsthemmungsbereichs liegt.

Im verriegelten Zustand des Drehfallenschlosses 20 ist das Fangelement 28 mit einer Fangfläche 28.1 im Abstand zur Funktionsfläche 24.2 angeordnet. Wenn im Crashfall die Klinke 24 durch die zwischen Drehfallenschloss 20 und Gegenelement 8 auftretenden Kräfte ein öffnendes Moment auf den Spannexzenter 30 ausübt und dieser sich zu öffnen beginnt, gelangt die Klinke 24 nach einem kurzen Schwenkweg mit ihrer Funktionsfläche 24.2 in Anlage an die Fangfläche 28.1. Der Winkel zwischen der Fangfläche 28.1 und der Funktionsfläche 24.2 liegt innerhalb des Selbsthemmungsbereichs, d.h die Klinke 24 kann kein öffnendes Moment auf das Fangelement 28 ausüben. Das Fangelement 28 stützt also die Klinke 24 im Crashfall ab. Das Fangelement 28 und der Spannexzenter 30 sind somit Sicherungselemente.

Zur Verbesserung der Belastbarkeit des Drehfallenschlosses 20, insbesondere im Crashfall, ist ein Koppelblech 34 vorgesehen, welches auf die beiden Lagerbolzen 22, 26 gesteckt und durch zwei Sicherungsringe 36 auf den Lagerbolzen 22, 26 gesichert ist. Die Klinke 24, das Fangelement 28 und der Spannexzenter 30 sind somit räumlich zwischen Schlossgehäuse 21 und Koppelblech 34 angeordnet.

Ausgehend von einem entriegelten Zustand des Drehfallenschlosses 20 nähern sich beim Verriegelungsvorgang, d.h. dem Übergang vom entriegelten Zustand in den verriegelten Zustand, das entriegelte Drehfallenschloss 20 und das Gegenelement 8 einander, bis das Gegenelement an der Klinke 24 anliegt. Im weiteren Verlauf des Verriegelungsvorgangs gelangt dann - aufgrund einer schließenden Schwenkbewegung der vom Gegenelement 8 beaufschlagten Klinke 24 - das Gegenelement 8 in die Aufnahme 24.1 der Klinke 24 und zum Grund der Aufnahme 21.1 des Schlossgehäuses 21. Das Gegenelement 8 wird dann zwischen einem Randbereich der Aufnahme 24.1 der Klinke 24 und einem Randbereich der Aufnahme 21.1 des Schlossgehäuses 21 gehalten. Das Fangelement 28 und der Spannexzenter 30 führen - aufgrund ihrer Vorspannung - eine schließende Schwenkbewegung zur Klinke 24 hin aus.

Die Klinke 24 wird im verriegelten Zustand gesichert, im Normalfall durch den Spannexzenter 30 und im Crashfall durch das Fangelement 28. Für den Entriegelungsvorgang, d.h. den Übergang vom verriegelten Zustand in den entriegelten Zustand, wird erst das Fangelement 28 geöffnet, d.h. von der Funktionsfläche 24.2 weggeschwenkt. Dazu weist das Fangelement 28 eine Betätigungsöffnung 28.2 auf, die exzentrisch zum zweiten Lagerbolzen 26 angeordnet ist und ein in Figur 2 nicht dargestelltes, das Fangelement 28 betätigendes Bauteil aufnehmen kann, das nachfolgend anhand weiterer Figuren noch näher beschrieben wird. Das das Fangelement 28 betätigende Bauteil kann das Schlossgehäuse 21 durch eine Durchgangsöffnung 21.2 im Schlossgehäuse 21 von außen kommend durchragen. Die Durchgangsöffnung 21.2 ist kreisbogenförmig um den zweiten Lagerbolzen 26 ausgebildet.

Beim Schwenken des Fangelements 28 wird der Spannexzenter 30 nach Durchlaufen eines Leerwinkels vom Fangelement 28 mitgenommen und ebenfalls geöffnet. Im unverbauten Zustand des Drehfallenschlosses 20 öffnet die Klinke 24 aufgrund ihrer durch die Feder 32 erzeugten Vorspannung. Im verbauten Zustand des Drehfallenschlosses 20 öffnet die Klinke 24 aufgrund ihrer Vorspannung jedoch nur dann, falls die Gewichtskraft der Lehne 4 ein Moment in Richtung der Gebrauchsstellung auf die Lehne 4 ausübt, das kleiner ist als ein Moment, dass durch die Vorspannung der Klinke 24 in Richtung der Nichtgebrauchsstellung der Lehne 4 erzeugt ist. Im Ausführungsbeispiel übt die Gewichtskraft der Lehne 4 in der Gebrauchsstellung ein derart großes Drehmoment um die Lehnendrehachse 5 auf die Lehne 4 in Richtung der Gebrauchsstellung aus, dass die Vorspannung der Klinke 24 nicht ausreichend ist, die Klinke 24 und somit die Lehne 4 so weit zu schwenken, dass das Gegenelement 8 aus der Aufnahme 21.1 des Schlossgehäuses 21 austreten kann. Damit die Lehne 4 nach dem Öffnen von dem Fangelement 28 und dem Spannexzenter 30 dennoch so weit in Richtung der Nichtgebrauchsstellung schwenkt, dass die Klinke 24 nicht wieder ungewollt verriegeln kann, weist die Verriegelungsvorrichtung 100 weitere, nachfolgend beschriebene Bauteile auf.

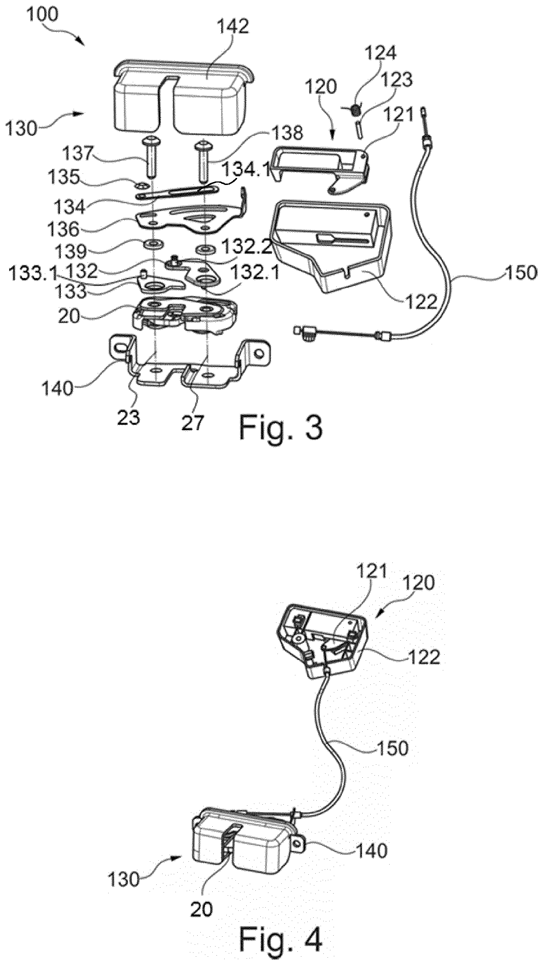

In Figur 3 ist eine Explosionsdarstellung eines möglichen Ausführungsbeispiels der erfindungsgemäßen Verriegelungsvorrichtung 100 zur Verriegelung der schwenkbaren Lehne 4 des Fahrzeugsitzes 1 an einer Fahrzeugstruktur 6 dargestellt.

Die Verriegelungsvorrichtung 100 umfasst ein Bedienelement 120 mit einem Bediengriff 121, welcher um eine Drehachse drehbar in einem Bedienelementgehäuse 122 angeordnet ist. Zur Bildung der Drehachse ist in dem Bedienelementgehäuse 122 ein Führungsstift 123 vorgesehen, auf welchem der Bediengriff 121 drehbar angeordnet ist. Des Weiteren umfasst das Bedienelement 120 ein als Schenkelfeder ausgebildetes Federelement 124, welches nach einer Betätigung des Bediengriffs 121 eine selbsttätige Rückführung in seine Ausgangsposition ermöglicht. Das Bedienelement 120 ist beispielsweise im Bereich eines Laderaums des Fahrzeugs oder in einem oberen Bereich der Lehne 4 angeordnet.

Weiterhin umfasst die Verriegelungsvorrichtung 100 ein Verriegelungselement 130 mit dem Drehfallenschloss 20 und einem Hebel 132, welcher als betätigendes Bauteil in mechanischer Wirkverbindung mit dem zuvor beschriebenen Fangelement 28 des Drehfallenschlosses 20 steht. Dazu weist der Hebel 132 einen ersten Zapfen 132.1 auf, der durch die Durchgangsöffnung 21.2 des Schlossgehäuses 21 hindurch in die Betätigungsöffnung 28.2 des Fangelements 28 eingreift. Der Hebel 132 ist drehbar und konzentrisch zu dem zweiten Lagerbolzen 26 gelagert. Ein zweiter Zapfen 132.2 des Hebels 132 ist bezogen auf den zweiten Lagerbolzen 26 radial weiter außen angeordnet und dient der Betätigung des Hebels 132. Dadurch, dass der zweite Zapfen 132.2 radial weiter außen als der erste Zapfen 132.1 angeordnet ist, sind die Entriegelungskräfte des Drehfallenschlosses 20 reduziert.

Zusätzlich umfasst das Verriegelungselement 130 einen Auswurfhebel 133, der drehbar und konzentrisch zu dem ersten Lagerbolzen 22 gelagert ist, und welcher gemeinsam mit einem Mitnehmer 134 eine Bewegungseinheit bildet. Die Bewegungseinheit umfasst den Hebel 132, den Auswurfhebel 133 und den Mitnehmer 134. Der Mitnehmer 134 weist ein Langloch 134.1 auf, in dem der zweite Zapfen 132.2 geführt ist. Mittels einer Sicherungsscheibe 135 ist der Mitnehmer 134 an einem Koppelstift 133.1 des Auswurfhebels 133 drehbar befestigt. Zwischen dem Hebel 132 und dem Auswurfhebel 133 einerseits und dem Mitnehmer 134 andererseits ist ein Lagerelement 136 angeordnet. Das Lagerelement 136 weist Durchgangsöffnungen auf, durch die der zweite Zapfen 132.2 und der Koppelstift 133.1 hindurch laufen, ohne in ihrer Bewegung um die jeweiligen Drehachsen gehindert zu sein. Das Lagerelement 136 weist eine Abstützung für eine äußere Hülle eines als Bowdenzug ausgeführten Verbindungselements 150 auf.

Das Drehfallenschloss 20, der Hebel 132, der Auswurfhebel 133, der Mitnehmer 134 und das Lagerelement 136 sind mittels zweier Schrauben 137, 138 unter Zwischenschaltung von jeweils einer Lagerbuchse 139 an einer Befestigungsplatte 140 befestigt und in einem Verriegelungselement-Gehäuse 142 angeordnet.

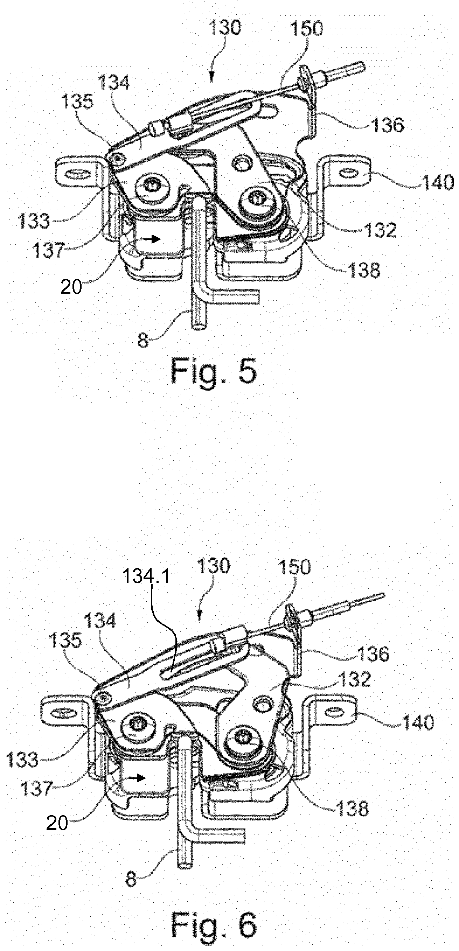

Das Verriegelungselement 130 ist mittels der Befestigungsplatte 140 an der Lehne 4 oder an der Fahrzeugstruktur 6 befestigbar, wobei je nach Anordnung des Verriegelungselements 130 das mit dem Drehfallenschloss 20 korrespondierende und in den Figuren 5 bis 9 dargestelltes Gegenelement 8 an der Fahrzeugstruktur 6 oder der Lehne 4 befestigt ist. Das Drehfallenschloss 20 und das Gegenelement 8, welches beispielsweise als Verriegelungsbolzen oder Verriegelungsbügel ausgebildet ist, stehen während eines verriegelten Zustands der Lehne 4 in der zuvor beschriebenen Weise in mechanischem Eingriff miteinander, wobei das Drehfallenschloss 20 in bekannter Weise das Gegenelement 8 zumindest abschnittsweise umgibt, beziehungsweise aufnimmt, und eine Relativbewegung zwischen dem Drehfallenschloss 20 und dem Gegenelement 8 verhindert.

Um ein Öffnen der Verriegelung des Drehfallenschlosses 20 durch eine Bedienung des Bedienelements 120 zu ermöglichen, ist der Bediengriff 121 mittels des als Bowdenzug ausgebildeten Verbindungselements 150 mit dem Hebel 132 und somit dem Drehfallenschloss 20 mechanisch verbunden, wobei bei einer Drehung des Bediengriffes 121 der Hebel 132 gedreht und das Drehfallenschloss 20 geöffnet wird. Der Hebel 132 wird dabei, gegebenenfalls nach Durchlaufen eines Leerwegs, zunächst bis in eine Zwischenstellung gedreht, ohne dass der Auswurfhebel 133 mitbewegt wird. Erst wenn der zweite Zapfen 132.2 an ein Ende des Langlochs 134.1 des Mitnehmers 134 gelangt, wird der Mitnehmer 134 von dem zweiten Zapfen 132.2 mitbewegt, wodurch auch der Auswurfhebel 133 gedreht wird.

Figur 4 zeigt eine perspektivische Darstellung der Verriegelungsvorrichtung 100 gemäß Figur 3.

Figur 5 zeigt eine perspektivische Darstellung eines Ausschnitts der Verriegelungsvorrichtung 100 gemäß Figur 3 in einem verriegelten Zustand. Hierbei stehen das Drehfallenschloss 20 und das im dargestellten Ausführungsbeispiel als Verriegelungsbügel ausgebildete Gegenelement 8 in mechanischem Eingriff, das heißt in verriegeltem Zustand, miteinander, wobei die Klinke 24 des Drehfallenschlosses 20 das Gegenelement 8 abschnittsweise umgibt und eine Relativbewegung zwischen dem Drehfallenschloss 20 und dem Gegenelement 8 verhindert.

In Figur 6 ist eine perspektivische Darstellung des Ausschnitts der Verriegelungsvorrichtung 100 gemäß Figur 5 während einer Entriegelung in einem ersten Zustand dargestellt.

Zur Entriegelung wird der Bediengriff 121 des Bedienelements 120 betätigt, vorliegend um den Führungsstift 123 gedreht. Dadurch wird mittels eines Seilzuges des als Bowdenzug ausgeführten Verbindungselements 150 der mit dem Drehfallenschloss 20 gekoppelte Hebel 132 um eine mittels der Schraube 138 gebildete Drehachse gedreht. Dazu ist ein Seilzugende mit dem Bediengriff 121 verbunden. Das andere Seilzugende ist durch eine an dem zweiten Zapfen 132.2 befestigte Öse geführt und weist eine Tonne auf, deren Durchmesser größer als ein Öffnungsdurchmesser der Öse ist, so dass durch Zug an dem Seilzug die Tonne des Seilzugs in Anlage an die Öse gerät und den Hebel 132 dreht. In entgegengesetzter Richtung kann sich die Tonne von der Öse lösen, so dass ein Freilauf zwischen dem Seilzug und dem Hebel 132 gegeben ist.

Im dem in Figur 6 dargestellten ersten Zustand während der Entriegelung, ist der Hebel 132 gerade soweit gedreht, dass sich das Drehfallenschloss 20 unmittelbar vor seiner Entriegelung in einem so genannten Totpunkt befindet. Die Klinke 24 wird gerade noch von dem Spannexzenter 30 am Öffnen gehindert. Ein geringfügiges Weiterbetätigen des Bediengriffs 121 in eine in den Figuren nicht dargestellte Zwischenstellung bewirkt ein geringfügiges Weiterschwenken des Hebels 132. Dadurch werden in der zuvor beschriebenen Weise das Fangelement 28 und der Spannexzenter 30 soweit gedreht, dass die Klinke 24 öffnen kann.

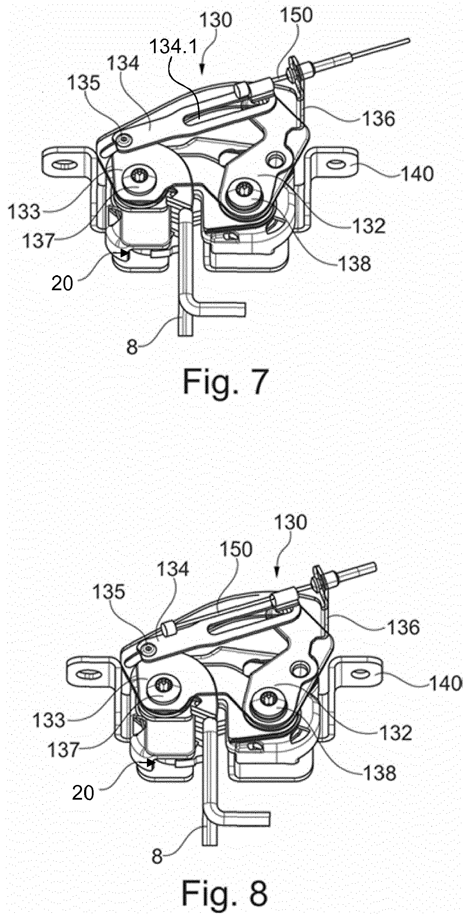

Figur 7 zeigt eine perspektivische Darstellung des Ausschnitts der Verriegelungsvorrichtung 100 gemäß Figur 5 während der Entriegelung und in einem zweiten Zustand. Aufgrund des zuvor erfolgten Erreichens der Zwischenstellung des Bediengriffes 121 ist das Drehfallenschloss 20 geöffnet und das Gegenelement 8 freigegeben. Zudem ist der zweite Zapfen 132.2 in Anlage an einem Ende des Langlochs 134.1 in dem Mitnehmer 134, so dass der Mitnehmer 134 eine Drehbewegung des Hebels 132 auf den Auswurfhebel 133 überträgt. Bei einer weiteren Betätigung des Bediengriffs 121 über die Zwischenstellung hinaus, wird der Auswurfhebel 133 um eine mittels der Schraube 137 gebildete Drehachse gedreht. Dies erzeugt eine Kraft auf das Gegenelement 8, so dass dieses relativ zum Verriegelungselement 130 verschoben wird. Hierdurch erfolgt ein geringfügiges Vorschwenken der Lehne 4 um die Lehnendrehachse 5 relativ zur Fahrzeugstruktur 6. Dadurch ist es möglich, dass die Lehne 4 in der geringfügig vorgeschwenkten Position gehalten wird, in der das Drehfallenschloss 20 nicht wieder verriegeln kann. Dadurch kann ein Nutzer nach einer Entriegelung der Verriegelungsvorrichtung 100 in einfacher Weise von einer anderen Position aus die Lehne 4 umklappen.

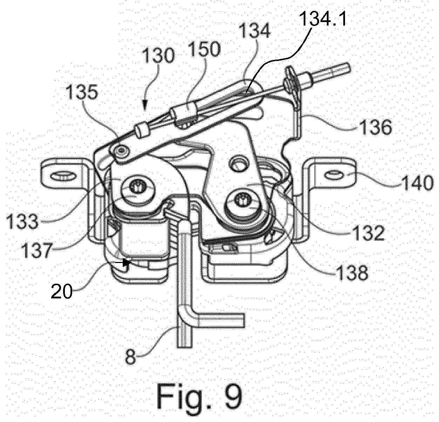

In der in Fig. 8 dargestellten Position befinden sich das Fangelement 28 und der Spannexzenter 30 in einer maximal ausgelenkten Position und beide sind nicht im Kontakt mit der Klinke 24. Durch Beendigung der Betätigung des Bediengriffes 121 löst sich die Tonne des Seilzugs des Verbindungselements 150 von der Öse des zweiten Zapfens 132.2. Dadurch erfolgt zudem solange eine teilweise Rückbewegung des Hebels 132 in Richtung seiner Ausgangsposition, bis das Fangelement 28 an der noch geöffneten Klinke 24 anliegt, wie in Figur 9 dargestellt. Es kommt dabei noch nicht zu einer Verrieglung des Gegenelements 8 mit dem Drehfallenschloss 20.

Eine in den Figuren nicht dargestellte Verrieglung des Gegenelements 8 mit dem Drehfallenschloss 20 erfolgt, indem eine rückschwenkende Kraft auf die Lehne 4 aufgebracht wird. Dadurch tritt das Gegenelement 8 in die Aufnahme 24.1 der Klinke 24 und dreht diese in eine verriegelte Position. Das Fangelement 28 und der Spannexzenter 30 drehen - wie zuvor beschrieben - in die sichernde Position. Zudem wird der Auswurfhebel 133 von dem Gegenelement 8 in seine Ausgangsposition zurückgeschwenkt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Schutzansprüchen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Schutzansprüchen genannten Einheiten bzw. Einrichtungen ausführen.

### Bezugszeichenliste

- 1: Fahrzeugsitz
- 3: Sitzteil
- 4: Lehne
- 5: Lehnendrehachse
- 6: Fahrzeugstruktur
- 8: Gegenelement
- 20: Drehfallenschloss
- 21: Schlossgehäuse
- 21.1: Aufnahme (des Schlossgehäuses 21)
- 22: erster Lagerbolzen
- 23: erste Schwenkachse
- 24: Klinke
- 24.1: Aufnahme (der Klinke 24)
- 24.2: Funktionsfläche (der Klinke 24)
- 26: zweiter Lagerbolzen
- 27: zweite Schwenkachse
- 28: Fangelement
- 28.1: Fangfläche
- 28.2: Betätigungsöffnung
- 30: Spannexzenter
- 30.1: Spannfläche
- 32: Feder
- 34: Koppelblech
- 36: Sicherungsring
- 100: Verriegelungsvorrichtung
- 120: Bedienelement
- 121: Bediengriff
- 122: Bedienelementgehäuse
- 123: Führungsstift
- 124: Federelement
- 130: Verriegelungselement
- 132: Hebel
- 132.1: erster Zapfen
- 132.2: zweiter Zapfen
- 133: Auswurfhebel
- 133.1: Koppelstift
- 134: Mitnehmer
- 134.1: Langloch
- 135: Sicherungsscheibe
- 136: Lagerelement
- 137: Schraube
- 138: Schraube
- 139: Lagerbuchse
- 140: Befestigungsplatte
- 142: Verriegelungselement-Gehäuse
- 150: Verbindungselement

## Patentansprüche

1. Verriegelungsvorrichtung (100), insbesondere zur Verriegelung einer Lehne (4) eines Fahrzeugsitzes (1) mit einer Fahrzeugstruktur (6), mit einem Drehfallenschloss (20) zum Verriegeln eines Gegenelements (8), wobei die Verriegelungsvorrichtung (100) einen Auswurfhebel (133) aufweist, der in einem entriegelten Zustand des Drehfallenschlosses (20) durch Betätigung eines Bediengriffs (121) das Gegenelement (8) relativ zum Drehfallenschloss (20) verschiebt,
**dadurch gekennzeichnet, dass**
das Drehfallenschloss (20) eine funktionsfähige Einheit zum Verriegeln eines Gegenelements (8) ist, die in modularer Weise um den Auswurfhebel (133) ergänzt werden kann..

2. Verriegelungsvorrichtung (100) nach Anspruch 1, **dadurch gekennzeichnet, dass** das Drehfallenschloss (20) eine um eine erste Schwenkachse (23) drehbare Klinke (24) zum Verriegeln des Gegenelements (8), und wenigstens ein um eine zweite Schwenkachse (27) drehbares Sicherungsmittel (28, 30) zum Abstützen der Klinke (24) in einer das Gegenelement (8) verriegelnden Position aufweist, wobei zum Entriegeln der Klinke (24) das wenigstens eine Sicherungsmittel (28, 30), durch Betätigung des Bediengriffs (121) bis in eine Zwischenstellung, so weit drehbar ist, dass die Klinke (24) in eine entriegelte Position drehbar ist, in der das Gegenelement (8) von der Klinke (24) freigegeben ist.

3. Verriegelungsvorrichtung (100) nach Anspruch 2, **dadurch gekennzeichnet, dass** der Auswurfhebel (133) mittels einer weiteren Betätigung des Bediengriffs (121) über die Zwischenstellung hinaus, das Gegenelement (8) relativ zu der Klinke (24) verschiebt.

4. Verriegelungsvorrichtung (100) nach einem der Ansprüche 1 bis 3, **dadurch gekennzeichnet, dass** das Drehfallenschloss (20) in modularer Weise um weitere Bauteile (120, 132, 134, 136, 137, 138, 139, 140, 142, 150) der Verriegelungsvorrichtung (100) ergänzt werden kann.

5. Verriegelungsvorrichtung (100) nach einem der Ansprüche 2 bis 4, **dadurch gekennzeichnet, dass** zwischen dem Bediengriff (121) und dem wenigstens einen Sicherungsmittel (28, 30) ein Hebel (132) angeordnet ist, wobei der Hebel (132) eine Entriegelungskraft zum Drehen des wenigstens einen Sicherungsmittels (28, 30) reduziert.

6. Verriegelungsvorrichtung (100) nach Anspruch 5, **dadurch gekennzeichnet, dass** die Entriegelungskraft zum Drehen des wenigstens einen Sicherungsmittels (28, 30) am Bediengriff (121) aufzubringen ist.

7. Verriegelungsvorrichtung (100) nach Anspruch 5 oder 6, **dadurch gekennzeichnet, dass** der Hebel (132) drehbar um die zweite Schwenkachse (27) gelagert ist.

8. Verriegelungsvorrichtung (100) nach Anspruch 7, **dadurch gekennzeichnet, dass** der Hebel (132) mit dem wenigstens einen Sicherungsmittel (28, 30) gekoppelt ist, und dass der Hebel (132) wenigstens temporär mit einem Verbindungselement (150) gekoppelt ist, wobei das Verbindungselement (150) wenigstens mittelbar an den Bediengriff (121) gekoppelt ist.

9. Verriegelungsvorrichtung (100) nach Anspruch 8, **dadurch gekennzeichnet, dass** der Hebel (132) mittels eines ersten Zapfens (132.1) mit dem wenigstens einen Sicherungsmittel (28, 30) gekoppelt ist.

10. Verriegelungsvorrichtung (100) nach Anspruch 8 oder 9, **dadurch gekennzeichnet, dass** der Hebel (132) mittels eines zweiten Zapfens (132.2) wenigstens temporär mit dem Verbindungselement (150) gekoppelt ist.

11. Verriegelungsvorrichtung (100) nach Anspruch 9 und 10, **dadurch gekennzeichnet, dass**, bezogen auf die zweite Schwenkachse (27), der ersten Zapfen (132.1) radial weiter innen angeordnet ist als der zweite Zapfen (132.2).

12. Verriegelungsvorrichtung (100) nach einem der Ansprüche 5 bis 11, **dadurch gekennzeichnet, dass** der Hebel (132) und der Auswurfhebel (133) mittels eines Mitnehmers (134) derart miteinander gekoppelt sind, dass eine Betätigung des Bediengriffs (121) bis zu einer Zwischenstellung den Hebel (132) dreht, während der Auswurfhebel (133) unbewegt bleibt, und eine Betätigung des Bediengriffs (121) über die Zwischenstellung hinaus den Hebel (132) und den Auswurfhebel (133) dreht.

13. Verriegelungsvorrichtung (100) nach Anspruch 10 und 12, **dadurch gekennzeichnet, dass** der Mitnehmer (134) ein Langloch (134.1) aufweist, in dem der zweite Zapfen (132.2) geführt ist.

14. Verriegelungsvorrichtung (100) nach einem der Ansprüche 1 bis 13, **dadurch gekennzeichnet, dass** die Verriegelungsvorrichtung (100) an der Fahrzeugstruktur (6) befestigt ist und das Gegenelement (8) an der Lehne (4) befestigt ist.

15. Verriegelungsvorrichtung (100) nach einem der Ansprüche 1 bis 13, **dadurch gekennzeichnet, dass** die Verriegelungsvorrichtung (100) an der Lehne (4) befestigt ist und das Gegenelement (8) an der Fahrzeugstruktur (6) befestigt ist.

## Claims

1. Locking device (100), especially for locking a backrest (4) of a vehicle seat (1) to a vehicle structure (6), having a rotary latch lock (20) for locking a counter element (8), wherein
the locking device (100) comprises an ejection lever (133) which, with the rotary latch lock (20) in an unlocked state, displaces the counter element (8) relative to the rotary latch lock (20) as a result of an operating handle (121) being actuated,
**characterized in that**
the rotary latch lock (20) is a functional unit for locking a counter element (8) which is able to be supplemented in a modular manner by the ejection lever (133).

2. Locking device (100) according to Claim 1,
**characterized in that**
the rotary latch lock (20) comprises a pawl (24), which is rotatable about a first pivot axis (23), for locking the counter element (8), and at least one securing means (28, 30) which is rotatable about a second pivot axis (27) for supporting the pawl (24) in a position which locks the counter element (8), wherein for unlocking the pawl (24), the at least one securing means (28, 30), as a result of the operating handle (121) being actuated up to an intermediate position, is rotatable until the pawl (24) is rotatable into an unlocked position in which the counter element (8) is released by the pawl (24).

3. Locking device (100) according to Claim 2, **characterized in that** the ejection lever (133) displaces the counter element (8) relative to the pawl (24) by means of the operating handle (121) being actuated further beyond the intermediate position.

4. Locking device (100) according to one of Claims 1 to 3, **characterized in that** the rotary latch lock (20) is able to be supplemented in a modular manner by further components (120, 132, 134, 136, 137, 138, 139, 140, 142, 150) of the locking device (100).

5. Locking device (100) according to one of Claims 2 to 4, **characterized in that** a lever (132) is arranged between the operating handle (121) and the at least one securing means (28, 30), wherein the lever (132) reduces an unlocking force for rotating the at least one securing means (28, 30).

6. Locking device (100) according to Claim 5, **characterized in that** the unlocking force for rotating the at least one securing means (28, 30) is to be applied at the operating handle (121).

7. Locking device (100) according to Claim 5 or 6, **characterized in that** the lever (132) is mounted so as to be rotatable about the second pivot axis (27) .

8. Locking device (100) according to Claim 7, **characterized in that** the lever (132) is coupled with the at least one securing means (28, 30), and **in that** the lever (132) is coupled at least temporarily with a connecting element (150), wherein the connecting element (150) is coupled at least indirectly on the operating handle (121).

9. Locking device (100) according to Claim 8, **characterized in that** the lever (132) is coupled with the at least one securing means (28, 30) by means of a first journal (132.1).

10. Locking device (100) according to Claim 8 or 9, **characterized in that** the lever (132) is coupled at least temporarily with the connecting element (150) by means of a second journal (132.2)

11. Locking device (100) according to Claim 9 and 10, **characterized in that**, with reference to the second pivot axis (27), the first journal (132.1) is arranged further radially inside than the second journal (132.2).

12. Locking device (100) according to one of Claims 5 to 11, **characterized in that** the lever (132) and the ejection lever (133) are coupled together in such a manner by means of an entrainment means (134) that actuation of the operating handle (121) up to an intermediate position rotates the lever (132), whilst the ejection lever (133) remains unmoved, and actuation of the operating handle (121) beyond the intermediate position rotates the lever (132) and the ejection lever (133).

13. Locking device (100) according to Claims 10 and 12, **characterized in that** the entrainment means (134) comprises an elongated hole (134.1) in which the second journal (132.2) is guided.

14. Locking device (100) according to one of Claims 1 to 13, **characterized in that** the locking device (100) is fastened on the vehicle structure (6) and the counter element (8) is fastened on the backrest (4).

15. Locking device (100) according to one of Claims 1 to 13, **characterized in that** the locking device (100) is fastened on the backrest (4) and the counter element (8) is fastened on the vehicle structure (6).

## Revendications

1. Dispositif de verrouillage (100), en particulier pour le verrouillage d'un dossier (4) d'un siège de véhicule (1) à une structure de véhicule (6), comprenant une serrure à pêne tournant (20) pour verrouiller un élément conjugué (8), le dispositif de verrouillage (100) présentant un levier d'éjection (133) qui déplacent l'élément conjugué (8) par rapport à la serrure à pêne tournant (20) dans un état déverrouillé de la serrure à pêne tournant (20) par actionnement d'une poignée de commande (121),
**caractérisé en ce que**
la serrure à pêne tournant (20) est une unité fonctionnelle pour le verrouillage d'un élément conjugué (8) qui peut être complétée de manière modulaire par le levier d'éjection (133).

2. Dispositif de verrouillage (100) selon la revendication 1, **caractérisé en ce que** la serrure à pêne tournant (20) présente un cliquet (24) pouvant tourner autour d'un premier axe de pivotement (23) pour le verrouillage de l'élément conjugué (8), et au moins un moyen de fixation (28, 30) pouvant tourner autour d'un deuxième axe de pivotement (27) pour supporter le cliquet (24) dans une position verrouillant l'élément conjugué (8), l'au moins un moyen de fixation (28, 30), par actionnement de la poignée de commande (121) jusque dans une position intermédiaire, pouvant tourner pour déverrouiller le cliquet (24) de telle sorte que le cliquet (24) puisse tourner dans une position déverrouillée dans laquelle l'élément conjugué (8) est libéré du cliquet (24).

3. Dispositif de verrouillage (100) selon la revendication 2, **caractérisé en ce que** le levier d'éjection (133), au moyen d'un actionnement supplémentaire de la poignée de commande (121) au-delà de la position intermédiaire, déplace l'élément conjugué (8) par rapport au cliquet (24) .

4. Dispositif de verrouillage (100) selon l'une quelconque des revendications 1 à 3, **caractérisé en ce que** la serrure à pêne tournant (20) peut être complétée de manière modulaire par d'autres composants (120, 132, 134, 136, 137, 138, 139, 140, 142, 150) du dispositif de verrouillage (100) .

5. Dispositif de verrouillage (100) selon l'une quelconque des revendications 2 à 4, **caractérisé en ce qu'**entre la poignée de commande (121) et l'au moins un moyen de fixation (28, 30) est disposé un levier (132), le levier (132) réduisant une force de déverrouillage pour faire tourner l'au moins un moyen de fixation (28, 30).

6. Dispositif de verrouillage (100) selon la revendication 5, **caractérisé en ce que** la force de déverrouillage pour faire tourner l'au moins un moyen de fixation (28, 30) doit être appliquée à la poignée de commande (121).

7. Dispositif de verrouillage (100) selon la revendication 5 ou 6, **caractérisé en ce que** le levier (132) est supporté de manière rotative autour du deuxième axe de pivotement (27).

8. Dispositif de verrouillage (100) selon la revendication 7, **caractérisé en ce que** le levier (132) est accouplé à l'au moins un moyen de fixation (28, 30), et **en ce que** le levier (132) est accouplé au moins temporairement à un élément de liaison (150), l'élément de liaison (150) étant accouplé au moins indirectement à la poignée de commande (121).

9. Dispositif de verrouillage (100) selon la revendication 8, **caractérisé en ce que** le levier (132) est accouplé au moyen d'un premier tourillon (132.1) à l'au moins un moyen de fixation (28, 30) .

10. Dispositif de verrouillage (100) selon la revendication 8 ou 9, **caractérisé en ce que** le levier (132) est accouplé au moyen d'un deuxième tourillon (132.2) au moins temporairement à l'élément de liaison (150).

11. Dispositif de verrouillage (100) selon les revendications 9 et 10, **caractérisé en ce que**, par rapport au deuxième axe de pivotement (27), le premier tourillon (132.1) est disposé radialement plus à l'intérieur que le deuxième tourillon (132.2).

12. Dispositif de verrouillage (100) selon l'une quelconque des revendications 5 à 11, **caractérisé en ce que** le levier (132) et le levier d'éjection (133) sont accouplés l'un à l'autre au moyen d'un dispositif d'entraînement (134) de telle sorte qu'un actionnement de la poignée de commande (121) jusqu'à une position intermédiaire fasse tourner le levier (132) tandis que le levier d'éjection (133) reste immobile, et qu'un actionnement de la poignée de commande (121) au-delà de la position intermédiaire fasse tourner le levier (132) et le levier d'éjection (133).

13. Dispositif de verrouillage (100) selon les revendications 10 et 12, **caractérisé en ce que** le dispositif d'entraînement (134) présente un trou oblong (134.1) dans lequel est guidé le deuxième tourillon (132.2).

14. Dispositif de verrouillage (100) selon l'une quelconque des revendications 1 à 13, **caractérisé en ce que** le dispositif de verrouillage (100) est fixé à la structure de véhicule (6) et l'élément conjugué (8) est fixé au dossier (4).

15. Dispositif de verrouillage (100) selon l'une quelconque des revendications 1 à 13, **caractérisé en ce que** le dispositif de verrouillage (100) est fixé au dossier (4) et l'élément conjugué (8) est fixé à la structure de véhicule (6).
